# EUROPEAN PATENT SPECIFICATION

(11) **EP 2 096 052 B1**
(45) Date of publication and mention of the grant of the patent: **14.12.2011**
(21) Application number: 08425115.6
(22) Date of filing: 26.02.2008
(51) Int. Cl.: B65G 43/08

(54) **A method and system for controlling product flows**
Verfahren und System zur Steuerung von Produktströmen
Procédé et système permettant de commander l'écoulement de produits

(43) Date of publication of application: 02.09.2009
(73) Proprietor: Cavanna S.p.A., 28077 Prato Sesia (NO) (IT)
(72) Inventor: Guidetti, Dario, c/o Cavanna S.p.A., 28077 Prato Sesia (Novara) (IT)
(74) Representative: Bosotti, Luciano

(56) References cited:
- US-A- 5 170 877

## Description

### Field of the invention

The present invention relates to techniques for controlling product flows.

The invention has been developed with particular attention paid to the possible use in plants for automatic packaging of products, such as, for example, foodstuff products.

### Description of the prior art

In applicational contexts such as, for example, plants for automatic packaging of products, in view of the high speed of packaging required, it frequently happens that it is necessary to feed one or more packaging machines each with two or more flows of product coming from the same production line, on- which an original flow of products is present.

For instance, the document No. US-A-5 170 877 describes a system that is in able to perform such a function on a flow of products set in a regular orderly array in successive ranks of products.

The operating problems become, instead, more complex when the flow of products at input to the system has the character of a generically "disorderly" (or "non-orderly") array, in which orderly formations,- such as rows or ranks of products in some way aligned to one another are not recognizable: it is, in other words, a flow of products arranged in a substantially random way.

To meet the above need, it is known to resort to a method according to the preamble of Claim 1. Such a method regulates operation of a system that is at the moment commercially available from the company B.V. Houdijk Holland of Vlaardingen (Holland).

This solution is somewhat imprecise and suffers from certain serious drawbacks.

Control of the advance of the products comprised in the "derived" flows usually presupposes formation of quite a long accumulation of products, and some products, such as certain foodstuff products, by their very nature and/or shape do not allow such accumulation, thus rendering the solution impracticable.

The systems for control of the accumulation are located at a distance from the area in which the derived flows are "tapped" from the original flow.

The amount of products that are travelling between the area for formation of the derived flows and the control systems is not quantified and hence may vary in contrast with the action that is sought by the accumulation.

The times between the action and the reaction are too long in proportion to the speeds required.

### Object and summary of the invention

The drawbacks outlined previously result in a great difficulty in regulating the flow of products properly in the various sections of the system.

The object of the present invention is hence to overcome the aforesaid drawbacks.

According to the present invention, the above object is achieved thanks to a method having the characteristics recalled in the ensuing claims. The invention moreover relates to a corresponding system as set out in claim 4.

The claims form an integral part of the technical disclosure of the invention provided herein.

In a possible embodiment, the proposed solution envisages positioning, as close as possible to the point for formation of the derived flows, an inspection station that sees to detecting and counting the products travelling in unit time. By causing the counting datum to interact with a function of control of the action of extracting products from the original flow, it is possible to regulate the amount of products sent into the various derived flows, obtaining for example a precise balancing thereof and/or a practically real-time adaptation to possible variations required in the derived flows (for example, because a processing/treatment station supplied with one of such flows is momentarily in conditions of arrest).

Possible embodiments of the proposed solution present various advantages.

For instance, it is possible to carry out an automatic regulation of the speeds of operation of the units (e.g., paddles) that extract the derived flows from the original flow so as to obtain a given number of products per minute for each derived flow.

The aforesaid units are then able to respond in a practically immediate way to the request for a larger or smaller number of products by the control system.

It is likewise possible to reduce (and in effect eliminate) the accumulations of products, in particular when the products are delicate ones.

It is possible to obtain an automatic balancing between the two or more derived flows that, for example, supply just one packaging machine.

The above is achieved at the same time affording the possibility of supplying in a bi-directional way the system for extracting the products to form the derived flow, located in a position furthest downstream with respect to the direction of advance of the original flow, so as to be able to recycle the products that have been allowed to pass beyond (for example, in the case of arrest of a station served by one of the derived flows).

Embodiments of the counting system described herein can find application in other situations, in particular where there is required the balancing of arrival of products between two or more sections of a packaging machine.

The system can prove very advantageous because, as the amount of products varies in unit time, it acts in a fast way, reducing to a few units (and virtually eliminating) the difference between the flows.

### Brief description of the annexed drawings

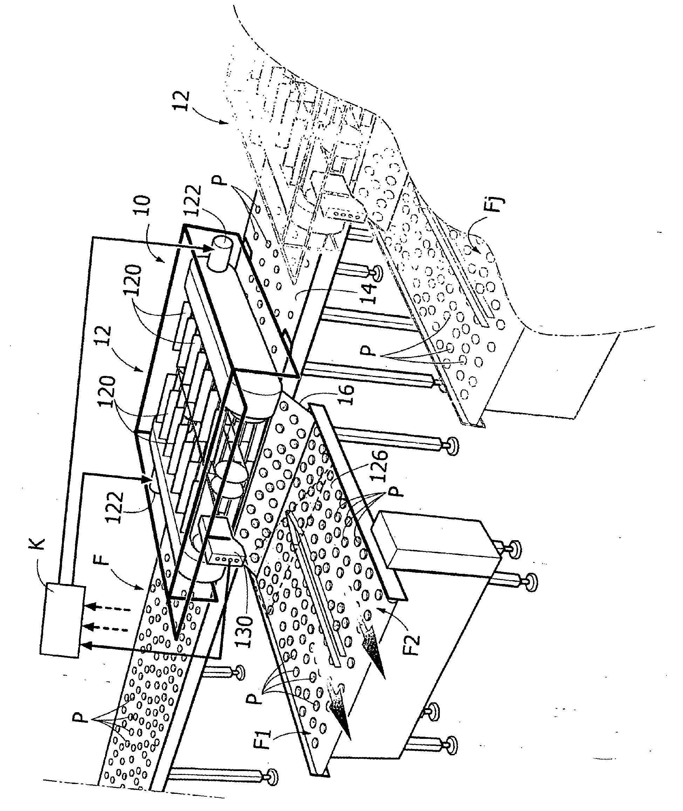

The invention will now be now described, purely by way of non-limiting example, with reference to the annexed plate of drawings, consisting of a single figure. Said figure is a general perspective view of a system for conveying products.

### - Detailed description of exemplary embodiments

In the following description numerous specific details are given to provide a thorough understanding of embodiments. The embodiments can be practiced without one or more of the specific details, or with other methods, components, materials, etc. In other instances, well-known structures, materials, or operations are not shown or described in detail in order to avoid obscuring aspects of the embodiments.

Reference throughout this specification to "one embodiment" means that a particular feature, structure, or characteristic described in connection with the embodiment is included in at least one embodiment. Thus, the appearances of the phrase "in one embodiment", in various places throughout this specification are not necessarily all referring to the same embodiment. Furthermore, the particular features, structures or characteristics may be combined in any suitable manner in one or more embodiments.

The headings provided herein are for convenience only and do not interpret the scope or meaning of the embodiments.

In the attached figures, the reference number 10 designates as a whole a system for forming, starting from an original flow F of products P (for example, foodstuff products such as biscuits laid "flat") a plurality of derived flows F1, F2, ... that are to be fed towards respective processing stations, such as, once again by way of example, packaging machines (flow-pack machines, boxing machines, etc.) not specifically illustrated.

The original flow F of products P, which may - be imagined as coming, once again by way of example, from a source such as a baking oven, has the character of a generically "disorderly" (or "non-orderly") array, i.e., of an array in which orderly formations, such as rows or ranks of products in some way aligned to one another, are not recognizable: it is, in other words, a flow of products P set in a substantially random way.

The system 10 comprises a plurality of extraction stations 12 set cascaded along the path of flow F of products P. The extraction stations 12 are hence designed to be traversed by the flow F of products P and derive from the flow F of products P that traverses the respective derived flows F1, F2, ... of products.

The annexed figure illustrates in detail just one of the extraction stations 12, which, in the example of embodiment illustrated herein, is in actual fact a station with a "dual" or "combined" structure in so far as it comprises two sections for generating at output, on a conveyor 126, two flows F1 and F2 of products P.

As far as the present description is concerned, such a combined structure may be in effect considered as constituted by a pair of extraction stations that are able to derive, from the flow F of products P that traverses them, two combined derived flows F1, F2 of products P.

The profile of another extraction station 12 (which can have either a single structure or a combined structure like the one just described) is indicated by a dashed line.

This representation is aimed at highlighting the fact that the extraction stations 12 (possibly with combined or dual structure, for the generation of two flows sent on the same output conveyor, but with different capacities) can be freely set cascaded along the path of the products of the main flow F of products P in any number according to the needs.

In particular, it is possible to envisage that a generic extraction station 12 is activated selectively for "tapping" from the main flow F at least one respective derived flow Fj, which is to be fed to a respective treatment station (or a respective section of a treatment station) situated downstream.

According to one solution in itself known (and hence such as not to require any detailed description herein), each station 12 can comprise one or more (for example, two, in the example illustrated) paddle systems 120 comprising paddles connected according to a general track structure.

Each of said structures is set above the conveyor (for example, a belt conveyor) 14 on which there arrives - moving from left to right, in the example represented - the flow F of incoming products P.

The track structure is set spanning, and crosswise with respect to, the conveyor 14, whilst the paddles 120 are aligned in the direction of advance of the products P on the conveyor 14. It follows that the paddles 120 mounted on the bottom branch of the track structure, albeit extending with their distal edge in the strict vicinity of the plane of the conveyor 14, on which the products P advance, do not hinder in themselves (but for a possible marginal action of deviation) the movement of traversal of the station 12 by the products P. However, since the various track structures are motor-powered (via respective motor drives 122), they make it possible to impart on to the paddles 120 mounted on the bottom branch of each track structure a lateral movement that brings said paddles to "sweep" the plane of the conveyor 14 on which the products P advance and to deflect the products P themselves laterally, getting them to come out laterally from the conveyor (for example, sending them on an inclined plate 16, functioning as chute or drop tray) so as to form the various derived flows F1, F2, ....

By adjusting the speeds of operation of the various motor drives 122, it is hence possible to adjust the speed at which the paddles 120 of the various stations 12 sweep laterally the plane of the conveyor 14, so as to regulate (taking of course into account the speed of advance of the "original" flow F of the products P on the conveyor 14) the intensities of the respective derived flows F1, F2, .... The extraction stations 12 hence have adjustable speeds of operation for regulating the intensities of the respective derived flows F1, F2, ... (i.e., generically, Fj).

In the example illustrated herein, the paddles 120 of the two combined sections of the extraction station 12 (visible in the figure), convey on the transverse belt 126 two combined flows F1 and F2, each comprising an amount of products (in terms of products per unit time) proportional to their speed and to the amount of products that they intercept on the incoming belt.

The paddle systems 120 can be strictly set alongside one another or else set at a distance so as to be able to feed respective derived flows F1, F2, forming respective lines of feed of the products P to respective treatment or manipulation stations (for example, packaging machines) or else to respective sections of said stations.

What has been described so far in the framework of the present detailed description of examples of embodiment corresponds to concepts of implementation and to principles of operation in themselves known and hence such as to not to require a more in-depth description herein.

Operation of the system 10 in conditions of equilibrium is achieved when the condition that can be schematically represented as F = ΣFj is satisfied, i.e., when the sum of the intensities of the derived flows Fj corresponds to the intensity of the original flow F.

The fact that, at least temporarily, the sum of the intensities of the derived flows Fj exceeds the intensity of the original flow F tends to trigger off conditions where one or more of the derived flows (usually the derived flow furthest downstream) prove to be deficient in terms of products P. Instead, the fact that the intensity of the original flow F is, at least momentarily, higher than the sum of the intensities of the derived flows Fj (for example, because one of the derived flows is interrupted on account of arrest of the processing station served thereby) tends to cause a certain amount of products to remain in the original flow also downstream of the point where the flow derived furthest downstream arises.

It is of course possible to "play on" the conditions outlined previously, for example by increasing and decreasing the intensities and/or the number of the derived flows Fj, possibly recalling back the products of the original flow that has passed beyond the point where the flow derived furthest downstream originates so as to route them in a derived flow.

In this regard, it should once again be noted that the rate of each derived flow Fj, i.e., the amount of products P per unit time sent towards the processing station or stations located downstream, is a factor that may be influenced by many variables, also on account of the possible presence of systems of accumulation and control of the length of said accumulation. These systems can intervene for stopping or restarting the corresponding extraction station 12 in accordance with the length of the "queue" of products accumulated.

The above observations clearly explain the importance of being able to control and regulate with precision, without delays in the course of the feedback action, the speeds of operation of the extraction stations 12, i.e., the intensities Fj of the derived flows to be generated.

The system described herein envisages that there be coupled to the extraction stations 12 inspection stations 130 capable of detecting the intensity (number of products P per unit time) of the corresponding derived flow Fj at output from the extraction station itself.

The above can be obtained whilst the derived flow is kept, at least temporarily, as a disorderly array of advancing products, i.e., before proceeding to a possible accumulation.

For example, in the embodiment illustrated herein, it is envisaged that one and the same inspection station 130 acts on the two flows F1, F2 at output from the two stations 12 combined with one another (which hence share the same inspection station 130) immediately downstream of the chute/drop tray 16, i.e., as soon as the products P arrive on the conveyor 126.

A control unit K (such as, for example, a Programmable Logic Controller or PLC or else a PC for industrial use - this may of course be the same control unit already envisaged for controlling and regulating operation of the system 10 as a whole) receives the measurement signal (products per unit time) supplied by the inspection unit 130 associated to the various extraction stations 12 - hence to various flows F1, F2, ..., Fj - and controls the various motor drives 122 accordingly so as to regulate (in a way and according to criteria in themselves known) the speeds of operation of the extraction stations 12 as a function of the intensities of said derived flows detected by the inspection stations 130.

The solution described herein envisages positioning the action of detection of the intensities or rates (number of products P per unit time) of the derived flow Fj as close as possible to the extraction station 12, i.e., where the derived flow is formed, before any action of accumulation/ordering can take place.

- The aim of the above is to be able to interact with the function of control and regulation of the motor drives 122 by the unit K in order to regulate as desired, according to the need, the amount of products P that are sent in the various derived flows Fj.

It is thus possible to carry out an automatic regulation of the speeds of operation of the units (e.g., paddles 120) that extract the derived flows from the original flow so as to obtain a given number of products per minute for each derived flow.

The stations 12 are thus able to respond practically immediately to the requirement of a greater or smaller number of products, by the control system, it being likewise possible to reduce (and in effect eliminate) the accumulations of products, in particular when delicate products are treated.

It is thus possible, for example, to obtain an automatic balancing between the two or more derived flows that, for example, supply just one packaging machine, if need be in conjunction with the possibility of supplying in a bi-directional way the system for extracting the products that are to form the derived flow located further downstream with respect to the direction of advance of the original flow so as to be able to recycle the products that have been allowed to pass beyond (for example, upon arrest of a station served by one of the derived flows).

In particular, where the balancing of the incoming products between two or more sections of a packaging machine is required, the solution described herein makes it possible, as the amount of products per unit time varies, to act in a fast way reducing to a few units (and virtually eliminating) the difference between the flows.

The possibility of detecting the intensities of said derived flows at output from the extraction stations 12 whilst the derived flows Fj are kept, at least temporarily, as disorderly arrays (i.e., without proceeding to an operation of ordering and/or accumulation) is afforded principally by contactless inspection stations, i.e., of the "optical" type (the term is not evidently tied down to the fact of operating in the visible range).

For example, an inspection station 130 that can be used in the framework of the solution described herein for detecting the intensity of the two flows F1 and F2 is the inspection station available under the commercial name IVC-3D Industrial Vision Camera manufactured by the company Sick-IVP of Waldkirch - Germany.

Said inspection station is able to scan each flow F1, F2 of products P subjected to measurement (namely, counting of the number of products per unit time) with a laser beam projected from above the products P in a vertical direction, i.e., in a direction orthogonal with respect to the conveyor.

The inspection station hence comprises an optical sensor, which is able to detect from above, but sideways on, i.e., slantwise, the scanning trace "described" by the laser beam. This scanning trace will comprise in general plane stretches (corresponding to the areas in which the laser beam comes to scan the surface of the conveyor 126) separated by "humps" (corresponding to the areas in which the beam laser comes to scan the surface of the products that advance on the conveyor 126, constituting elements in relief with respect to the conveyor 126 itself).

From an analysis of the optical signal corresponding to a number of scanning traces in succession (in practice, by counting the number of "humps" for each trace), the unit is hence able to supply a counting datum corresponding to the number of products P per unit time advancing on the conveyor 126, even when said products are arranged in an altogether scattered and disorderly way.

A laser station of the above type can divide its range of action into two or more sections, when, as in the case represented herein, a single extraction station 12 is able to generate two distinct flows F1, F2.

Results as a whole similar to the ones described herein can be obtained also with other inspection stations known in the art, for example via a video camera (such as a CCD video camera for industrial use) equipped with processing cards, able to perform a function of visual identification of the individual products P, with corresponding counting function.

Of course, without prejudice to the principle of the invention, the details of construction and the embodiments may vary, even significantly, with respect to what is described and illustrated herein, without thereby departing from the scope of the invention, as defined by the annexed claims.

## Claims

1. A method of treating a flow (F) of products (P) advancing in a disorderly array, the method including the operation of cascading along said flow (F) of products (P) a plurality of extraction stations (12) to be traversed by said flow (F) of products (P), said extraction stations (12) to derive from said flow (F) of products (P) that traverses them respective derived flows (F1, F2, ..., Fj) of products (P) and having an adjustable speed of operation (122) for regulating the intensities of the respective derived flows (F1, F2, ..., Fj),
the method being **characterized by** the operations of:
- keeping, at least temporarily, for said derived flows (F1, F2, ..., Fj) at output from said extraction stations (12), the character of disorderly arrays of advancing products;
- detecting (130), with the inspection of said disorderly arrays of products advancing in said derived flows, the intensities of said flows (F1, F2, ..., Fj) derived at output from said extraction stations (12); and
- regulating (K, 122) the speeds of operation of said extraction stations (12) as a function of the intensities of said derived flows detected by said inspection.

2. The method according to Claim 1, including the operation of detecting the intensities of said flows (F1, F2, ..., Fj) derived at output from said extraction stations (12) via visual inspection (130) of said disorderly arrays of products advancing in said derived flows (F1, F2, ..., Fj).

3. The method according to Claim 2, wherein said visual inspection (130) includes the operations of:
- illuminating said disorderly arrays of advancing products (P) with a light beam orthogonal to the array;
- detecting the trace of illumination of the products (P) in the array according to a direction oblique with respect to said light beam orthogonal to the array, said trace presenting irregularities corresponding to the products (P) illuminated; and
- analysing said trace by detecting said irregularities and deducing therefrom the number of products in the flow.

4. A system for treating a flow (F) of products (P) advancing in a disorderly array, the system comprising a plurality of extraction stations (12) set cascaded along said flow (F) of products (P); said extraction stations (12) being traversable by said flow (F) of products (P) to derive from said flow (F) of products (P) that traverses them respective derived flows (F1, F2, ..., Fj) of products (P) and having an adjustable speed of operation for regulating the intensities of the respective derived flows (F1, F2, ..., Fj),
the system being **characterized in that** it includes:
- at least one inspection station (130) coupled to said extraction stations (12) for detecting the intensities of said derived flows (F1, F2, ..., Fj) at output from said extraction stations (12) whilst said derived flows (F1, F2, ..., Fj) are kept, at least temporarily, as disorderly arrays of advancing products; and
- a control unit (K) operatively connected to said at least one inspection station (130) and to said extraction stations (12) for regulating the speeds of operation (122) of said extraction stations (12) as a function of the intensities of said derived flows (F1, F2, ..., Fj) detected by said at least one inspection station (130).

5. The system according to Claim 4, including at least one extraction station (12), in which the products (P) of said flow (F) are pushed (120) laterally towards a chute or drop tray (16) for formation of at least one (F1, F2) of said derived flows (F1, F2, ..., Fj), and wherein- said at least one inspection station (130) acts in a position corresponding to said chute or drop tray (16).

6. The system according to Claim 4 or Claim 5, including a pair of combined extraction stations (12) to derive from said flow (F) of products (P) that traverses them two combined derived flows (F1, F2) of products (P) and wherein said at least one inspection station (130) acts on both of said combined derived flows (F1, F2) of products (P).

7. The system according to any one of Claims 4 to 6, including a pair of combined extraction stations (12) to derive from said flow (F) of products (P) that traverses them two combined derived flows (F1, F2) of products (P) and wherein associated to said pair of combined extraction stations (12) is a single output conveyor (126) for conveying said two combined derived flows (F1, F2) of products (P).

8. The system according to any one of Claims 4 to 7, including at least one extraction station (12) with paddle formations (120) coextensive with said flow (F) of products (P), said paddle formations (120) being motor-powered (122) to exert on the products (P) that are to form said derived flows (F1, F2, ..., Fj) a movement of thrust laterally with respect to said flow (F) of products (P).

9. The system according to Claim 8, wherein said paddle formations (120) are mounted in a motor-powered track structure (122).

10. The system according to any one of Claims 4 to 9, wherein said at least one inspection station (130) is a visual-inspection station (130).

11. The system according to Claim 10, wherein said visual-inspection station (130) includes:
- a light source for illuminating said disorderly arrays of advancing products (P) with a light beam orthogonal to the array; and
- a detector for detecting the trace of illumination of the products (P) in the array according to a direction that is oblique with respect to said light beam orthogonal to the array, said trace presenting irregularities corresponding to the products (P) illuminated and thus representing the number of products in the flow.

12. The system according to Claim 11, wherein said light source is a laser source.

## Patentansprüche

1. Verfahren zum Behandeln eines Stromes (F) von in einer ungeordneten Anordnung vorrückenden Erzeugnissen (P), wobei das Verfahren den Vorgang des entlang des Stromes (F) von Erzeugnissen (P) erfolgenden Kaskadierens einer Mehrzahl von von dem Strom (F) von Erzeugnissen (P) zu durchquerenden Entnahmestationen (12) beinhaltet, wobei die Entnahmestationen (12) aus dem Strom (F) von sie durchquerenden Erzeugnissen (P) jeweilige abgezweigte Ströme (F1, F2, ..., Fj) von Erzeugnissen (P) abzweigen und eine anpassbare Betriebsgeschwindigkeit (122) zum Regulieren der Intensitäten der jeweiligen abgezweigten Ströme (F1, F2, ... , Fj) aufweisen,
wobei das Verfahren durch die nachfolgenden Vorgänge **gekennzeichnet** ist:
wenigstens vorübergehend für die abgezweigten Ströme (F1, F2, ... , Fj) am Ausgang aus den Entnahmestationen (12) erfolgendes Wahren des Charakters der ungeordneten Anordnungen von vorrückenden Erzeugnissen;
bei der Prüfung der ungeordneten Anordnungen von in den abgezweigten Strömen vorrückenden Erzeugnissen erfolgendes Erfassen (130) der Intensitäten der am Ausgang aus den Entnahmestationen (12) abgezweigten Ströme (F1, F2, ..., Fj); und
Regulieren (K, 122) der Betriebsgeschwindigkeiten der Entnahmestationen (12) als Funktion der Intensitäten der durch die Prüfung erfassten abgezweigten Ströme.

2. Verfahren nach Anspruch 1, beinhaltend den Vorgang des Erfassens der Intensitäten der am Ausgang der Entnahmestationen (12) abgezweigten Ströme (F1, F2, ... , Fj) mittels einer optischen Prüfung (130) der ungeordneten Anordnungen von in den abgezweigten Strömen (F1, F2, ... , Fj) vorrückenden Erzeugnissen.

3. Verfahren nach Anspruch 2, wobei die optische Prüfung (130) die nachfolgenden Vorgänge beinhaltet:
Anstrahlen der ungeordneten Anordnungen von vorrückenden Erzeugnissen (P) mit einem Lichtstrahl senkrecht zu der Anordnung;
Erfassen der Anleuchtspur der Erzeugnisse (P) in der Anordnung entsprechend einer Richtung schräg in Bezug auf den zu der Anordnung senkrechten Lichtstrahl, wobei die Spur Unregelmäßigkeiten entsprechend den angestrahlten Erzeugnissen (P) darstellt;
und
Analysieren der Spur durch Erfassen der Unregelmäßigkeiten und hieraus erfolgendes Ableiten der Anzahl von Erzeugnissen in dem Strom.

4. System zum Behandeln eines Stromes (F) von in einer ungeordneten Anordnung vorrückenden Erzeugnissen (P), wobei das System eine Mehrzahl von Entnahmestationen (12) umfasst, die kaskadenartig entlang des Stromes (F) von Erzeugnissen (P) angeordnet sind; wobei die Entnahmestationen (12) von dem Strom (F) von Erzeugnissen (P) durchquerbar sind, um aus dem Strom (F) von sie durchquerenden Erzeugnissen (P) jeweilige abgezweigte Ströme (F1, F2, ..., Fj) von Erzeugnissen (P) mit einer anpassbaren Betriebsgeschwindigkeit zur Regelung der Intensitäten der jeweiligen abgezweigten Ströme (F1, F2, ..., Fj) abzuzweigen,
wobei das System **dadurch gekennzeichnet ist, dass** es umfasst:
wenigstens eine Prüfungsstation (130), die mit den Entnahmestationen (12) gekoppelt ist, um die Intensitäten der abgezweigten Ströme (F1, F2, ..., Fj) am Ausgang aus den Entnahmestationen (12) zu erfassen, während die abgezweigten Ströme (F1, F2, ... ,
Fj) wenigstens vorübergehend als ungeordnete Anordnungen von vorrückenden Erzeugnissen beibehalten werden; und
eine Steuereinheit (K), die funktionell mit der wenigstens einen Prüfungsstation (130) und den Entnahmestationen (12) verbunden ist, um die Betriebsgeschwindigkeiten (122) der Entnahmestationen (12) als Funktion der Intensitäten der von der wenigstens einen Prüfungsstation (130) erfassten abgezweigten Ströme (F1, F2, ..., Fj) zu regulieren.

5. System nach Anspruch 4, beinhaltend wenigstens eine Entnahmestation (12), in der die Erzeugnisse (P) des Stromes (F) seitlich hin zu einer Rutsche oder Fallbahn (16) zur Bildung von wenigstens einem (F1, F2) der abgezweigten Ströme (F1, F2, ..., Fj) geschoben (120) werden, wobei die wenigstens eine Prüfungsstation (130) in einer Richtung entsprechend der Rutsche oder Fallbahn (16) wirkt.

6. System nach Anspruch 4 oder Anspruch 5, beinhaltend ein Paar von kombinierten Entnahmestationen (12) zum aus dem Strom (F) von sie durchquerenden Erzeugnissen (P) erfolgenden Abzweigen von zwei kombinierten abgezweigten Strömen (F1, F2) von Erzeugnissen (P), wobei die wenigstens eine Prüfungsstation (130) an beiden der kombinierten abgezweigten Ströme (F1, F2) von Erzeugnissen (P) wirkt.

7. System nach einem der Ansprüche 4 bis 6, beinhaltend ein Paar von kombinierten Entnahmestationen (12) zum aus dem Strom (F) von sie durchquerenden Erzeugnissen (P) erfolgenden Abzweigen von zwei kombinierten abgezweigten Strömen (F1, F2) von Erzeugnissen (P), wobei dem Paar von kombinierten Entnahmestationen (12) ein einziger Ausgabeförderer (126) zum Fördern der beiden kombinierten abgezweigten Ströme (F1, F2) von Erzeugnissen (P) zugeordnet ist.

8. System nach einem der Ansprüche 4 bis 7, beinhaltend wenigstens eine Entnahmestation (12) mit Schaufelgebilden (120), die sich mit dem Strom (F) von Erzeugnissen (P) erstrecken, wobei die Schaufelgebilde (120) motorgetrieben (122) sind, um den Erzeugnissen (P), die die abgezweigten Ströme (F1, F2, ..., Fj) bilden sollen, eine Stoßbewegung seitlich in Bezug auf den Strom (F) von Erzeugnissen (P) zu verleihen.

9. System nach Anspruch 8, wobei die Schaufelgebilde (120) in einer motorgetriebenen Schienenstruktur (122) montiert sind.

10. System nach einem der Ansprüche 4 bis 9, wobei die wenigstens eine Prüfungsstation (130) eine optische Prüfungsstation (130) ist.

11. System nach Anspruch 10, wobei die optische Prüfungsstation (130) beinhaltet:
eine Lichtquelle zum Anstrahlen der ungeordneten Anordnungen von vorrückenden Erzeugnissen (P) mit einem Lichtstrahl senkrecht zu der Anordnung; und
einen Detektor zum Erfassen der Anleuchtspur der Erzeugnisse (P) in der Anordnung entsprechend einer Richtung schräg in Bezug auf den zu der Anordnung senkrechten Lichtstrahl, wobei die Spur Unregelmäßigkeiten entsprechend den angestrahlten Erzeugnissen (P) darstellt und damit die Anzahl von Erzeugnissen in dem Strom angibt.

12. System nach Anspruch 11, wobei die Lichtquelle eine Laserquelle ist.

## Revendications

1. Procédé de traitement d'un flux (F) de produits (P) avançant selon un agencement désordonné, le procédé comprenant l'opération consistant à disposer en cascade le long dudit flux (F) de produits (P) une pluralité de postes d'extraction (12) devant être traversés par ledit flux (F) de produits (P), lesdits postes d'extraction (12) devant faire dériver dudit flux (F) de produits (P) qui les traverse des flux dérivés respectifs (F1, F2, ..., Fj) de produits (P) et ayant une vitesse de fonctionnement ajustable (122) pour réguler les intensités des flux dérivés respectifs (F1, F2, ... , Fj),
le procédé étant **caractérisé par** les opérations consistant à :
- conserver, au moins temporairement, pour lesdits flux dérivés (F1, F2, ... , Fj) au niveau de la sortie desdits postes d'extraction (12), le caractère d'agencements désordonnés des produits avançant ;
- détecter (130), avec l'inspection desdits agencements désordonnés de produits avançant dans lesdits flux dérivés, les intensités desdits flux (F1, F2, ..., Fj) dérivés au niveau de la sortie desdits postes d'extraction(12) ; et
- réguler (K, 122) les vitesses de fonctionnement desdits postes d'extraction (12) en fonction des intensités desdits flux dérivés détectés par ladite inspection.

2. Procédé selon la revendication 1, comprenant l'opération de détection des intensités desdits flux (F1, F2, ... , Fj) dérivés au niveau de la sortie desdits postes d'extraction (12) par le biais de l'inspection visuelle (130) desdits agencements désordonnés de produits avançant dans lesdits flux dérivés (F1, F2, ... , Fj).

3. Procédé selon la revendication 2, dans lequel ladite inspection visuelle (130) comprend les opérations consistant à :
- éclairer lesdits agencements désordonnés de produits avançant (P) avec un faisceau lumineux orthogonal à l'agencement ;
- détecter la trace d'éclairement des produits (P) dans l'agencement en fonction d'une direction oblique par rapport audit faisceau lumineux orthogonal à l'agencement, ladite trace présentant des irrégularités correspondant aux produits (P) éclairés ; et
- analyser ladite trace en détectant lesdites irrégularités et déduire de celle-ci le nombre de produits dans le flux.

4. Système de traitement d'un flux (F) de produits (P) avançant selon un agencement désordonné, le système comprenant une pluralité de postes d'extraction (12) disposés en cascade le long dudit flux (F) de produits (P) ; lesdits postes d'extraction (12) pouvant être traversés par ledit flux (F) de produits (P) pour faire dériver dudit flux (F) de produits (P) qui les traverse des flux dérivés respectifs (F1, F2, ..., Fj) de produits (P) et ayant une vitesse de fonctionnement réglable pour réguler les intensités des flux dérivés respectifs (F1, F2, ..., Fj),
le système étant **caractérisé en ce qu'**il comprend :
- au moins un poste d'inspection (130) couplé auxdits postes d'extraction (12) pour détecter les intensités desdits flux dérivés (F1, F2, ..., Fj) au niveau de la sortie desdits postes d'extraction (12) tandis que lesdits flux dérivés (F1, F2, ..., Fj) sont maintenus, au moins temporairement, sous forme d'agencements désordonnés de produits avançant ; et
- une unité de commande (K) reliée opérationnellement audit au moins un poste d'inspection (130) et auxdits postes d'extraction (12) pour réguler les vitesses de fonctionnement (122) desdits postes d'extraction (12) en fonction des intensités desdits flux dérivés (F1, F2, ... , Fj) détectés par ledit au moins un poste d'inspection (130).

5. Système selon la revendication 4, comprenant au moins un poste d'extraction (12), dans lequel les produits (P) dudit flux (F) sont poussés (120) latéralement vers un plateau de réception ou récupération (16) pour la formation d'au moins l'un (F1, F2) desdits flux dérivés (F1, F2, ... , Fj), et dans lequel ledit au moins un poste d'inspection (130) agit dans une position correspondant audit plateau de réception ou récupération (16).

6. Système selon la revendication 4 ou la revendication 5, comprenant une paire de postes d'extraction combinés (12) pour faire dériver dudit flux (F) de produits (P) qui les traverse deux flux dérivés combinés (F1, F2) de produits (P) et dans lequel ledit au moins un poste d'inspection (130) agit sur les deux desdits flux dérivés combinés (F1, F2) de produits (P).

7. Système selon l'une quelconque des revendications 4 à 6, comprenant une paire de postes d'extraction (12) pour faire dériver dudit flux (F) de produits (P) qui les traverse deux flux dérivés combinés (F1, F2) de produits (P) et dans lequel ladite paire de postes d'extraction combinés (12) est un convoyeur à sortie unique (126) destiné à acheminer lesdits deux flux dérivés combinés (F1, F2) de produits (P).

8. Système selon l'une quelconque des revendications 4 à 7, comprenant au moins un poste d'extraction (12) avec des formations de palettes (120) s'étendant conjointement avec ledit flux (F) de produits (P), lesdites formations de palettes (120) étant motorisées (122) pour exercer sur les produits (P) qui doivent former lesdits flux dérivés (F1, F2, ..., Fj) un mouvement de poussée latéralement par rapport audit flux (F) de produits (P).

9. Système selon la revendication 8, dans lequel lesdites formations de palettes (120) sont montées dans une structure de rail motorisée (122).

10. Système selon l'une quelconque des revendications 4 à 9, dans lequel ledit au moins un poste d'inspection (130) est un poste d'inspection visuelle (130).

11. Système selon la revendication 10, dans lequel ledit poste d'inspection visuelle (130) comprend :
- une source de lumière pour éclairer lesdits agencements désordonnés de produits avançant (P) avec un faisceau lumineux orthogonal à l'agencement ; et
- un détecteur pour détecter la trace d'éclairement des produits (P) dans l'agencement selon une direction qui est oblique par rapport audit faisceau lumineux orthogonal à l'agencement, ladite trace présentant des irrégularités correspondant aux produits (P) éclairés et représentant ainsi le nombre de produits dans le flux.

12. Système selon la revendication 11, dans lequel ladite source de lumière est une source laser.
